# EUROPEAN PATENT APPLICATION

(11) **EP 4 557 493 A1**
(43) Date of publication of application: **21.05.2025**
(21) Application number: 23893503.5
(22) Date of filing: 20.10.2023
(51) Int. Cl.: H01M 50/505

(54) **BATTERY AND ELECTRIC DEVICE**

(30) Priority: 21.11.2022 CN 202223091296 U
(71) Applicant: Contemporary Amperex Technology (Hong Kong) Limited, Central, Hong Kong (HK)
(72) Inventor: NIU, Congsu, Ningde, Fujian 352100 (CN); WU, Ningsheng, Ningde, Fujian 352100 (CN); LI, Xiaowei, Ningde, Fujian 352100 (CN); PEI, Zhenxing, Ningde, Fujian 352100 (CN)
(74) Representative: Gong, Jinping
(86) International application number: PCT/CN2023/125705
(87) International publication number: WO 2024/109411

(57) **Abstract**

This application provides a battery and an electrical device, and relates to the field of batteries. The battery includes a plurality of battery cells and a busbar component. The busbar component includes a buffer portion and two connecting portions. The buffer portion is connected between the two connecting portions along a first direction. The two connecting portions are connected to two of the battery cells respectively to implement electrical connection between the two battery cells. Along a second direction, the buffer portion protrudes from the connecting portions toward the battery cells. The second direction is perpendicular to the first direction. The busbar component of the battery includes a buffer portion. When a battery cell expands, the buffer portion can deform to elongate the busbar component along the first direction, thereby preventing a relatively large shear force from being generated between the connecting portion and the battery cell, and reducing the risk of detachment of the connecting portion from the battery cell. **In** addition, the buffer portion protruding from the connecting portion toward the battery cell can utilize the internal space of the battery more efficiently, reduce occupation of the internal space of the battery, and increase the energy density of the battery.

## Description

### CROSS-REFERENCE TO RELATED APPLICATIONS

This application claims priority to Chinese Patent Application No. 2022230912961, filed on November 21, 2022 and entitled "BATTERY AND ELECTRICAL DEVICE", which is incorporated herein by reference in its entirety.

### TECHNICAL FIELD

This application relates to the field of batteries, and in particular, to a battery and an electrical device.

### BACKGROUND

Batteries are widely applied in the field of new energy, for example, to electric vehicles, new energy vehicles, and so on. New energy vehicles and electric vehicles have become a new trend in the development of the automotive industry. The development of the battery technology needs to consider a plurality of design factors, including performance parameters such as cycle life, discharge capacity, charge rate, and discharge rate, and also needs to consider the energy density of the battery. However, the energy density of the battery is still relatively low currently.

### SUMMARY

An objective of some embodiments of this application is to provide a battery and an electrical device to alleviate the problem that the energy density of a battery is relatively low in the related art.

According to a first aspect, an embodiment of this application provides a battery. The battery includes a plurality of battery cells and a busbar component. The busbar component includes a buffer portion and two connecting portions. The buffer portion is connected between the two connecting portions along a first direction. The two connecting portions are connected to two of the battery cells respectively to implement electrical connection between the two battery cells. Along a second direction, the buffer portion protrudes from the connecting portions toward the battery cells. The second direction is perpendicular to the first direction.

In the above technical solution, the busbar component of the battery includes a buffer portion. When a battery cell expands, the buffer portion can deform to elongate the busbar component along the first direction, thereby preventing a relatively large shear force from being generated between the connecting portion and the battery cell, and reducing the risk of detachment of the connecting portion from the battery cell. In addition, in contrast to a scenario in which the buffer portion protrudes from the connecting portion away from the battery cells, the buffer portion protruding from the connecting portion toward the battery cells can utilize the internal space of the battery more efficiently, reduce occupation of the internal space of the battery, and increase the energy density of the battery. In addition, when the buffer portion protrudes from the connecting portion toward the battery cell along the second direction, a corresponding groove can be formed on a side, oriented away from the battery cell, of the buffer portion. The groove is available for wiring, thereby further improving the utilization rate of the internal space of the battery and further increasing the energy density of the battery.

In an optional technical solution put forward in an embodiment of this application, the buffer portion includes a first buffer section, a second buffer section, and a third buffer section connected in sequence. The first buffer section and the third buffer section are connected to the two connecting portions respectively. Along the second direction, the second buffer section is closer to an electrode assembly of the battery cell than the connecting portions.

In the above technical solution, the second buffer section is connected to the two connecting portions by the first buffer section and the third buffer section respectively. The second buffer section is closer to the electrode assembly of the battery cell than the connecting portions along the second direction. In this way, the buffer portion protrudes from the connecting portions toward the battery cell, so as to improve the space utilization rate of the battery and increase the energy density of the battery. When the battery cell expands, the first buffer section and the third buffer section extend along the first direction, and the second buffer section moves toward the connecting portions along the second direction, thereby elongating the busbar component along the first direction, and reducing the risk of detachment of the connecting portions from the battery cell. In addition, the first buffer section, the second buffer section, and the third buffer section jointly define a groove. The groove is available for wiring, thereby further improving the utilization rate of the internal space of the battery and further increasing the energy density of the battery.

In an optional technical solution put forward in an embodiment of this application, the first buffer section is disposed at an obtuse angle to the second buffer section; and/or the third buffer section is disposed at an obtuse angle to the second buffer section.

In the above technical solution, the first buffer section is disposed at an obtuse angle to the second buffer section. Therefore, in contrast to a scenario in which the first buffer section is disposed at a right angle to the second buffer section, the above technical solution achieves a larger buffering capacity, and elongates the busbar component to a longer length along the first direction when the battery cell expands. In contrast to a scenario in which the first buffer section is disposed at an acute angle to the second buffer section, the opening of the groove in the above technical solution is relatively large, thereby facilitating wiring. Similarly, the third buffer section is disposed at an obtuse angle to the second buffer section. Therefore, in contrast to a scenario in which the third buffer section is disposed at a right angle to the second buffer section, the above technical solution achieves a larger buffering capacity, and elongates the busbar component to a longer length along the first direction when the battery cell expands. In contrast to a scenario in which the third buffer section is disposed at an acute angle to the second buffer section, the opening of the groove in the above technical solution is relatively large, thereby facilitating wiring.

In an optional technical solution put forward in an embodiment of this application, the second buffer section is partially bent to form a first buffer zone.

In the above technical solution, the first buffer zone is formed by partially bending the second buffer section, thereby further improving the buffering effect of the buffer portion, and endowing the buffer portion with a larger buffering capacity. Therefore, the busbar component can elongate to a longer length along the first direction when the battery cell expands.

In an optional technical solution put forward in an embodiment of this application, the second buffer section includes a first connecting section and a second connecting section. Along the first direction, the first buffer zone is located between the first connecting section and the second connecting section. The first connecting section is connected to the first buffer section. The second connecting section is connected to the third buffer section.

In the above technical solution, the first buffer zone is connected to the first buffer section by the first connecting section, and the first buffer zone is connected to the third buffer section by the second connecting section. In this way, the first buffer zone is located on the second buffer section at a position near the middle of the second buffer section, thereby facilitating deformation when the battery cell expands.

In an optional technical solution put forward in an embodiment of this application, along the second direction, the first buffer zone protrudes from the first connecting section and the second connecting section toward the battery cell.

In the above technical solution, the first buffer zone is made to protrude from the first connecting section and the second connecting section toward the battery cell along the second direction, thereby making the space of the groove larger and facilitating wiring.

In an optional technical solution put forward in an embodiment of this application, along the first direction, a minimum distance between the first buffer section and the second buffer section is L₁, satisfying: 10 mm ≤ L₁ ≤ 50 mm.

In the above technical solution, the distance between the first buffer section and the second buffer section along the first direction is limited to a range of 10 mm to 50 mm, thereby not only ensuring a sufficient area of the connecting portions to facilitate connection between the connecting portion and the battery cell, but also endowing the buffer portion with a sufficient buffering capacity. When the battery cell expands, the busbar component can elongate for a sufficient distance along the first direction, and the space of the groove is made relatively large to facilitate wiring. If L₁ is less than 10 mm, then the buffering capacity of the buffer portion is relatively small, the buffering effect is weak, and the space of the groove is relatively small and inconvenient for wiring. If L₁ is greater than 50 mm, the buffer portion occupies a relatively large part of the busbar component, so that the area of the connecting portions is relatively small and inconvenient for connection to the battery cell.

In an optional technical solution put forward in an embodiment of this application, the first buffer section, the second buffer section, and the third buffer section jointly define a groove. Along the second direction, a depth of the groove is h, satisfying: 0 < h ≤ 10 mm.

In the above technical solution, the depth of the groove is limited to a range of 0 to 10 mm (excluding 0), thereby not only facilitating connection of the connecting portions to the battery cell, but also endowing the buffer portion with a sufficient buffering capacity, and also making the space of the groove relatively large to facilitate wiring. If h is greater than 10 mm, then the distance between the connecting portion and the second buffer section is relatively large along the second direction, and the space between the connecting portion and a wall portion on which an electrode terminal is disposed may be not enough for accommodating the buffer portion.

In an optional technical solution put forward in an embodiment of this application, the battery cells are connected to the connecting portions by a welding layer. The second buffer section abuts against the battery cells.

In the above technical solution, the battery cell is connected to the connecting portion by a welding layer, so that a clearance exists between the connecting portion and the wall portion on which the electrode terminal is disposed, and a minimum width of the clearance is the thickness of the welding layer. The buffer portion is accommodated in the clearance to improve the utilization rate of the internal space of the battery and increase the energy density of the battery. The second buffer section abuts against the battery cell, so that the buffer portion fully utilizes the space in the clearance, thereby considerably increasing the energy density of the battery.

In an optional technical solution put forward in an embodiment of this application, at least one of the connecting portions is partially bent to form a second buffer zone.

In the above technical solution, the connecting portion is partially bent to form a second buffer zone, and therefore, when a battery cell expands, both the buffer portion and the second buffer zone can deform, and the busbar component can elongate to a longer length along the first direction, thereby reducing the risk of detachment of the connecting portion from the battery cell.

In an optional technical solution put forward in an embodiment of this application, at least one of the connecting portions includes a third connecting section and a fourth connecting section. Along the first direction, the second buffer zone is located between the third connecting section and the fourth connecting section. The third connecting section is connected to the battery cell. The fourth connecting section is connected to the buffer portion.

In the above technical solution, the second buffer zone is connected to the battery cell by the third connecting section, and the second buffer zone is connected to the buffer portion by the fourth connecting section. In this way, the second buffer zone is located on the connecting portion at a position near the middle of the connecting portion, thereby facilitating deformation when the battery cell expands.

In an optional technical solution put forward in an embodiment of this application, along the second direction, the second buffer zone protrudes from the third connecting section and the fourth connecting section toward the battery cell.

In the above technical solution, in contrast to a scenario in which the second buffer zone protrudes from the third connecting section and the fourth connecting section away from the battery cells, the second buffer zone protruding from the third connecting section and the fourth connecting section toward the battery cells can utilize the internal space of the battery more efficiently, reduce occupation of the internal space of the battery, and increase the energy density of the battery.

In an optional technical solution put forward in an embodiment of this application, at least two arched bulges are disposed in the second buffer zone.

In the above technical solution, at least two arched bulges are disposed, thereby increasing the buffering capacity of the second buffer zone.

In an optional technical solution put forward in an embodiment of this application, the two connecting portions each are partially bent to form two second buffer zones respectively.

In the above technical solution, the two connecting portions each are bent to form two second buffer zones respectively. Therefore, when a battery cell expands, the buffer portion and the two second buffer zones can deform, and the busbar component can elongate to a longer length along the first direction, thereby reducing the risk of detachment of the connecting portion from the battery cell.

In an optional technical solution put forward in an embodiment of this application, the battery cell includes a pressure relief mechanism. Along a third direction, the busbar component is connected to at least one side of the pressure relief mechanism. A minimum distance between the pressure relief mechanism and one end of the battery cell is L₂; and a width of the busbar component is L₃, satisfying: 10 mm ≤ L₃ ≤ L₂. The first direction, the second direction, and the third direction are perpendicular to each other.

In the above technical solution, by making the width L₃ of the busbar component be greater than or equal to 10 mm, the width of the busbar component is made relatively large. To the extent that the flow capacity is enough, the larger the width of the busbar component, the thinner the thickness of the busbar component can be made, so as to reduce the stress on the electrode terminal of the battery cell. In addition, along the third direction, the busbar component is connected to at least one side of the pressure relief mechanism. By making L₃ be less than or equal to L₂, the busbar component is prevented from extending beyond the battery cell, thereby avoiding waste of the internal space of the battery, and reducing the risk of interference between different busbar components or between a busbar component and another component.

In an optional technical solution put forward in an embodiment of this application, along the third direction, a width of the busbar component is L₃, and a width of each of the battery cells is L₄, satisfying: 10 mm ≤ L₃ ≤ L₄. The first direction, the second direction, and the third direction are perpendicular to each other.

In the above technical solution, by making the width L₃ of the busbar component be greater than or equal to 10 mm, the width of the busbar component is made relatively large. To the extent that the flow capacity is enough, the larger the width of the busbar component, the thinner the thickness of the busbar component can be made, so as to reduce the stress on the electrode terminal of the battery cell. By making L₃ be less than or equal to L₄, the busbar component is prevented from extending beyond the battery cell, thereby avoiding waste of the internal space of the battery, and reducing the risk of interference between different busbar components or between a busbar component and another component.

In an optional technical solution put forward in an embodiment of this application, L₃ = L₄.

In the above technical solution, along the third direction, the width of the busbar component is equal to the width of the battery cell. In this case, the width of the busbar component is the largest, and the thickness of the busbar component can be made the thinnest to minimize the stress on the electrode terminal of the battery cell.

In an optional technical solution put forward in an embodiment of this application, a thickness of each of the connecting portions is d, satisfying: 0.5 mm ≤ d ≤ 3 mm.

In the above technical solution, the thickness of the connecting portion is set between 0.5 mm and 3 mm to avoid an excessive thickness of the connecting portion while ensuring that the connecting portion can be securely welded to the battery cell, thereby avoiding an excessive weight of the busbar component. If d is less than 0.5 mm, the thickness of the connecting portion is insufficient, and can hardly ensure secure welding between the connecting portion and the battery cell. If d is greater than 3 mm, the thickness of the busbar component is relatively large, resulting in an increase in the weight of the battery.

In an optional technical solution put forward in an embodiment of this application, 0.5 mm ≤ d ≤ 1 mm.

In the above technical solution, by setting the thickness of the connecting portion between 0.5 mm and 1 mm, the weight of the busbar component is relatively light, and at the same time, the connecting portion can be securely welded to the battery cell.

According to a second aspect, an embodiment of this application further provides an electrical device. The electrical device includes the battery disclosed above. The battery is configured to provide electrical energy for the electrical device.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is an exploded view of a battery (without showing a busbar component) according to some embodiments of this application;
FIG. 3 is a schematic structural diagram of a battery (without showing a box) according to some embodiments of this application;
FIG. 4 is a schematic front view of a battery (without showing a box) according to some embodiments of this application;
FIG. 5 is a schematic structural diagram of a busbar component according to some embodiments of this application;
FIG. 6 is a schematic front view of a busbar component according to some embodiments of this application;
FIG. 7 is a schematic structural diagram of a busbar component according to some other embodiments of this application;
FIG. 8 is a schematic front view of a busbar component according to some other embodiments of this application;
FIG. 9 is a schematic top view of a battery (without showing a box) according to some embodiments of this application; and
FIG. 10 is a schematic top view of a battery (without showing a box) according to some other embodiments of this application.

List of reference numerals: 10-box; 11-first part; 12-second part; 20-battery cell; 21-electrode terminal; 22-pressure relief mechanism; 23-wall portion; 30-busbar component; 31-connecting portion; 311-third connecting section; 312-fourth connecting section; 313-second buffer zone; 32-buffer portion; 321-first buffer section; 322-second buffer section; 3221-first buffer zone; 3222-first connecting section; 3223-second connecting section; 323-third buffer section; 324-groove; 40-welding layer; 100-battery; 200-controller; 300-motor; 1000-vehicle.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte solution. The electrode assembly includes a positive electrode plate, a negative electrode plate, and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of a material such as PP (polypropylene, polypropylene) or PE (polyethylene, polyethylene). In addition, the electrode assembly may be of a jelly-roll type structure or a stacked type structure, without being limited herein.

Currently, the market trend shows that batteries are applied more extensively. Batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for batteries keeps soaring with the increase of the application fields of the batteries.

The development of the battery technology needs to consider a plurality of design factors, including performance parameters such as cycle life, discharge capacity, charge rate, and discharge rate, and also needs to consider the energy density of the battery. However, the energy density of the battery is still relatively low currently.

The inventor hereof is aware that a buffer portion is typically disposed on an existing busbar component. When a battery cell expands, the buffer portion can deform to increase the total length of the busbar component, thereby preventing a relatively large shear force from being generated between the busbar component and the battery cell, and reducing the risk of detachment of the busbar component from the battery cell. However, the buffer portion in the prior art protrudes away from the battery cell, so that the buffer portion occupies the internal space of the battery and results in a relatively low energy density of the battery.

In view of this, an embodiment of this application provides a battery. The battery includes a plurality of battery cells and a busbar component. The busbar component includes a buffer portion and two connecting portions. The buffer portion is connected between the two connecting portions along a first direction. The two connecting portions are connected to two of the battery cells respectively to implement electrical connection between the two battery cells. Along a second direction, the buffer portion protrudes from the connecting portions toward the battery cells. The second direction is perpendicular to the first direction.

The busbar component of the battery includes a buffer portion. When a battery cell expands, the buffer portion can deform to elongate the busbar component along the first direction, thereby preventing a relatively large shear force from being generated between the connecting portion and the battery cell, and reducing the risk of detachment of the connecting portion from the battery cell. In addition, in contrast to a scenario in which the buffer portion protrudes from the connecting portion away from the battery cells, the buffer portion protruding from the connecting portion toward the battery cells can utilize the internal space of the battery more efficiently, reduce occupation of the internal space of the battery, and increase the energy density of the battery.

In addition, when the buffer portion protrudes from the connecting portion toward the battery cell along the second direction, a corresponding groove can be formed on a side, oriented away from the battery cell, of the buffer portion. The groove is available for wiring, thereby further improving the utilization rate of the internal space of the battery and further increasing the energy density of the battery.

The technical solutions described in this embodiment of this application are applicable to a battery and an electrical device that uses the battery.

The electrical device may be a vehicle, a mobile phone, a portable device, a notebook computer, a ship, a spacecraft, an electric toy, a power tool, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle 1000 is used as an example of the electrical device.

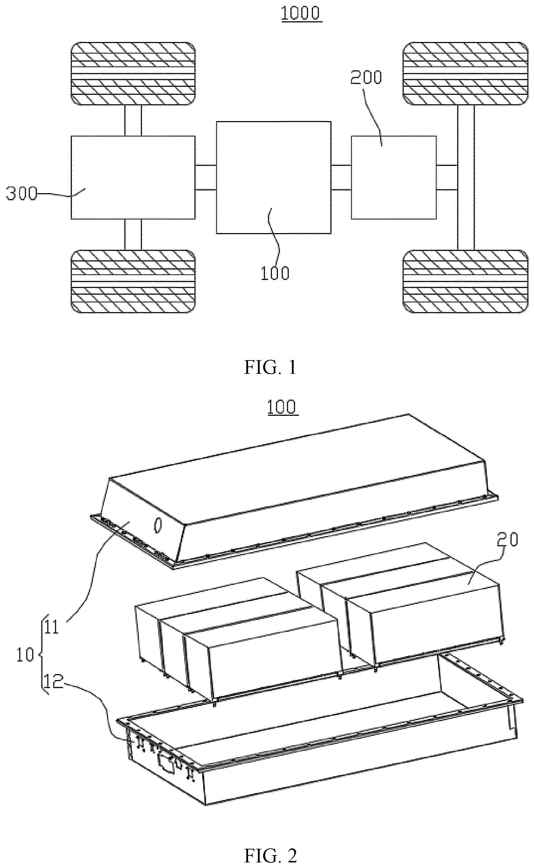

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 (without showing the busbar component 30) according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits the opening of the second part 12 so that the first part 11 and the second part 12 together define the accommodation space. Alternatively, both the first part 11 and the second part 12 may be hollow structures opened at one side. The opening of the first part 11 fits the opening of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box 10.

Each battery cell 20 may be, but is not limited to, a secondary battery cell or a primary battery cell; or, may be a lithium-sulfur battery cell, a sodium-ion battery cell, or a magnesium-ion battery cell. The battery cell 20 may be in a shape such as a cylinder, a flat body, a cuboid, or other shapes.

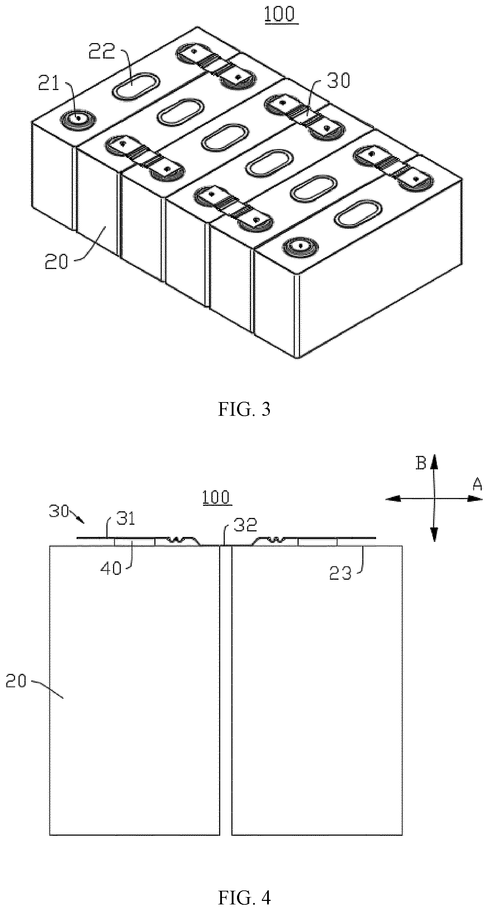

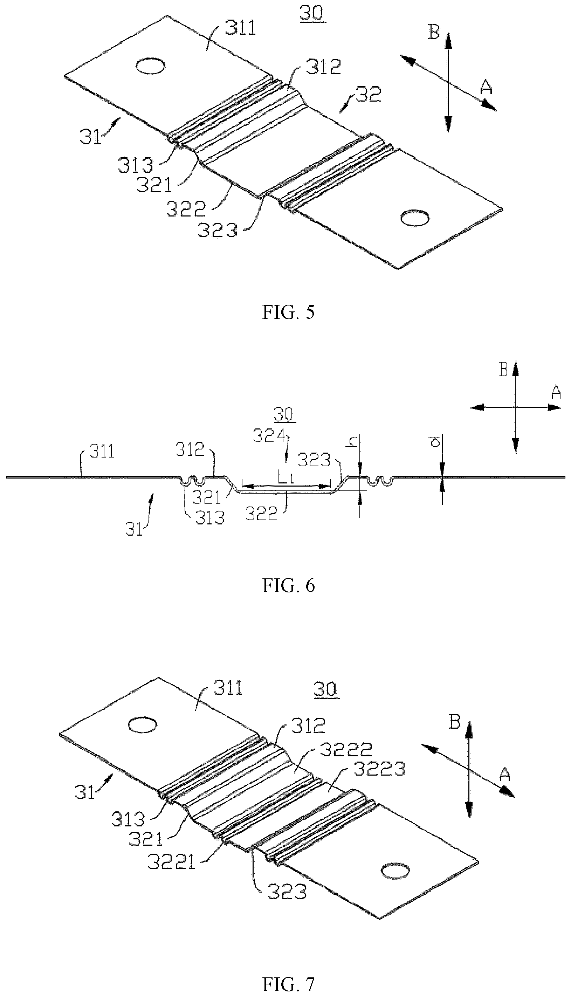

Referring to FIG. 3, FIG. 4, FIG. 5, and FIG. 6, FIG. 3 is a schematic structural diagram of a battery 100 (without showing a box 10) according to some embodiments of this application. FIG. 4 is a schematic front view of a battery 100 (without showing a box 10) according to some embodiments of this application. FIG. 5 is a schematic structural diagram of a busbar component 30 according to some embodiments of this application. FIG. 6 is a schematic front view of a busbar component 30 according to some embodiments of this application. An embodiment of this application provides a battery 100. The battery 100 includes a plurality of battery cells 20 and a busbar component 30. The busbar component 30 includes a buffer portion 32 and two connecting portions 31. The buffer portion 32 is connected between the two connecting portions 31 along a first direction. The two connecting portions 31 are connected to two of the battery cells 20 respectively to implement electrical connection between the two battery cells 20. Along a second direction, the buffer portion 32 protrudes from the connecting portions 31 toward the battery cells 20. The second direction is perpendicular to the first direction.

The battery cell 20 is a minimum unit of a battery 100. The battery cell 20 includes a shell, an electrode assembly, a pressure relief mechanism 22, and an electrode terminal 21. The electrode assembly is accommodated in the shell to isolate the electrode assembly from the external environment. The electrode assembly is a component that reacts electrochemically in the battery cell 20. The electrode assembly is typically formed of a positive electrode plate and a negative electrode plate that are wound or stacked together. Generally, a separator is disposed between the positive electrode plate and the negative electrode plate. The shell includes a wall portion 23. The pressure relief mechanism 22 is disposed on the wall portion 23. The pressure relief mechanism 22 is a component configured to release pressure inside the battery cell 20. When the internal pressure of the battery cell 20 reaches a burst pressure, the pressure relief mechanism 22 releases the internal pressure of the battery cell 20. The electrode terminal 21 is disposed on the wall portion 23. The electrode terminal 21 may be configured to be electrically connected to the electrode assembly to output or input electrical energy of the battery cell 20.

The busbar component 30 is commonly known as a busbar or a bus bar, and is configured to implement electrical connection between a plurality of battery cells 20.

The connecting portion 31 is a part, configured to be connected to the battery cell 20, on the busbar component 30. In some embodiments, the connecting portion 31 is connected to the electrode terminal 21 of the battery cell 20. The busbar component 30 includes two connecting portions 31. The two connecting portions 31 are connected to two battery cells 20 respectively to implement electrical connection between the two battery cells 20.

The buffer portion 32 is a part serving a buffering function on the busbar component 30. The buffer portion 32 is easily deformable. When a battery cell 20 expands, the buffer portion 32 can deform to elongate the busbar component 30 as a whole, thereby preventing a relatively large shear force from being generated between the connecting portion 31 and the battery cell 20, and reducing the risk of detachment of the connecting portion 31 from the battery cell 20.

Referring to FIG. 4, FIG. 5, and FIG. 6, the first direction is the direction A shown in the drawing, and the second direction is the direction B shown in the drawing.

Along the first direction, the buffer portion 32 is connected between the two connecting portions 31. The first direction may be a length direction of the busbar component 30.

Along the second direction, the buffer portion 32 protrudes from the connecting portions 31 toward the battery cells 20, and the second direction may be a thickness direction of the busbar component 30.

"Along the second direction, the buffer portion 32 protrudes from the connecting portions 31 toward the battery cells 20" means that the buffer portion 32 protrudes toward a battery cell 20 by starting from a connecting portion 31. Along the second direction, the buffer portion 32 is closer to the battery cells 20 than the connecting portions 31.

It is hereby noted that the buffer portion 32 may obliquely protrude from the connecting portion 31 toward the battery cell 20, which also falls within the protection scope of this application.

When the connecting portion 31 is connected to the electrode terminal 21, a clearance exists between the busbar component 30 and the wall portion 23. The buffer portion 32 is made to protrude from the connecting portion 31 toward the battery cell 20, thereby causing the buffer portion 32 to be accommodated in the clearance, and fully utilizing the internal space of the battery 100.

The busbar component 30 of the battery 100 includes a buffer portion 32. When a battery cell 20 expands, the buffer portion 32 can deform to elongate the busbar component 30 along the first direction, thereby preventing a relatively large shear force from being generated between the connecting portion 31 and the battery cell 20, and reducing the risk of detachment of the connecting portion 31 from the battery cell 20. In addition, in contrast to a scenario in which the buffer portion 32 protrudes from the connecting portion 31 away from the battery cells 20, the buffer portion 32 protruding from the connecting portion 31 toward the battery cells 20 can utilize the internal space of the battery 100 more efficiently, reduce occupation of the internal space of the battery 100, and increase the energy density of the battery 100. In addition, when the buffer portion 32 protrudes from the connecting portion 31 toward the battery cell 20 along the second direction, a corresponding groove 324 can be formed on a side, oriented away from the battery cell 20, of the buffer portion 32. The groove 324 is available for wiring, thereby further improving the utilization rate of the internal space of the battery 100 and further increasing the energy density of the battery 100.

Referring to FIG. 4, FIG. 5, and FIG. 6, in some embodiments, the buffer portion 32 includes a first buffer section 321, a second buffer section 322, and a third buffer section 323 connected in sequence. The first buffer section 321 and the third buffer section 323 are connected to the two connecting portions 31, respectively. Along the second direction, the second buffer section 322 is closer to the electrode assembly of the battery cell 20 than the connecting portion 31.

The first buffer section 321 is a part, connected to one connecting portion 31, of the buffer portion 32; and the third buffer section 323 is a part, connected to another connecting portion 31, of the buffer portion 32. The second buffer section 322 is connected to the first buffer section 321 and the third buffer section 323. In addition, along the second direction, the second buffer section 322 is a part, closest to the battery cell 20, of the buffer portion 32.

"Along the second direction, the second buffer section 322 is closer to the electrode assembly of the battery cell 20 than the connecting portion 31" means that, along the second direction, a maximum distance between the second buffer section 322 and the electrode assembly (or the wall portion 23) is less than a minimum distance between the connecting portion 31 and the electrode assembly (or the wall portion 23).

The second buffer section 322 is connected to the two connecting portions 31 by the first buffer section 321 and the third buffer section 323 respectively. The second buffer section 322 is closer to the electrode assembly of the battery cell 20 than the connecting portions 31 along the second direction. In this way, the buffer portion 32 protrudes from the connecting portions 31 toward the battery cell 20, so as to improve the space utilization rate of the battery 100 and increase the energy density of the battery 100. When the battery cell 20 expands, the first buffer section 321 and the third buffer section 323 extend along the first direction, and the second buffer section 322 moves toward the connecting portions 31 along the second direction, thereby elongating the busbar component 30 along the first direction, and reducing the risk of detachment of the connecting portions 31 from the battery cell 20. In addition, the first buffer section 321, the second buffer section 322, and the third buffer section 323 jointly define a groove 324. The groove 324 is available for wiring, thereby further improving the utilization rate of the internal space of the battery 100 and further increasing the energy density of the battery 100.

**In** some embodiments, the first buffer section 321, the second buffer section 322, and the third buffer section 323 are all flat plate structures. The second buffer section 322 is parallel to the wall portion 23 of the battery cell 20.

Referring to FIG. 4, FIG. 5, and FIG. 6, in some embodiments, the first buffer section 321 is disposed at an obtuse angle to the second buffer section 322; and/or the third buffer section 323 is disposed at an obtuse angle to the second buffer section 322.

"The first buffer section 321 is disposed at an obtuse angle to the second buffer section 322" may be understood to mean that, a surface of the first buffer section 321 is at an obtuse angle to a surface of the second buffer section 322 along the second direction, where both of the surfaces are oriented away from the battery cell 20.

"The third buffer section 323 is disposed at an obtuse angle to the second buffer section 322" may be understood to mean that a surface of the third buffer section 323 is at an obtuse angle to a surface of the second buffer section 322 along the second direction, where both of the surfaces are oriented away from the battery cell 20.

The first direction and the second direction jointly define a plane, and "the first buffer section 321 is disposed at an obtuse angle to the second buffer section 322" may be understood to mean that projections of the first buffer section 321 and the second buffer section 322 on this plane are at an obtuse angle to each other. "The third buffer section 323 is disposed at an obtuse angle to the second buffer section 322" may be understood to mean that projections of the third buffer section 323 and the second buffer section 322 on this plane are at an obtuse angle to each other.

With the first buffer section 321 disposed at an obtuse angle to the second buffer section 322, in contrast to a scenario in which the first buffer section 321 is disposed at a right angle to the second buffer section 322, the above arrangement achieves a larger buffering capacity, and elongates the busbar component 30 to a longer length along the first direction when the battery cell 20 expands. In contrast to a scenario in which the first buffer section 321 is disposed at an acute angle to the second buffer section 322, the relatively large opening of the groove 324 in the above arrangement facilitates wiring. Similarly, with the third buffer section 323 disposed at an obtuse angle to the second buffer section 322, in contrast to a scenario in which the third buffer section 323 is disposed at a right angle to the second buffer section 322, the above arrangement achieves a larger buffering capacity, and elongates the busbar component 30 to a longer length along the first direction when the battery cell 20 expands. In contrast to a scenario in which the third buffer section 323 is disposed at an acute angle to the second buffer section 322, the relatively large opening of the groove 324 in the above arrangement facilitates wiring.

In some other embodiments, the first buffer section 321, the second buffer section 322, and the third buffer section 323 may be arc-shaped plate structures instead. For example, the first buffer section 321, the second buffer section 322, and the third buffer section 323 jointly form an arched bulge.

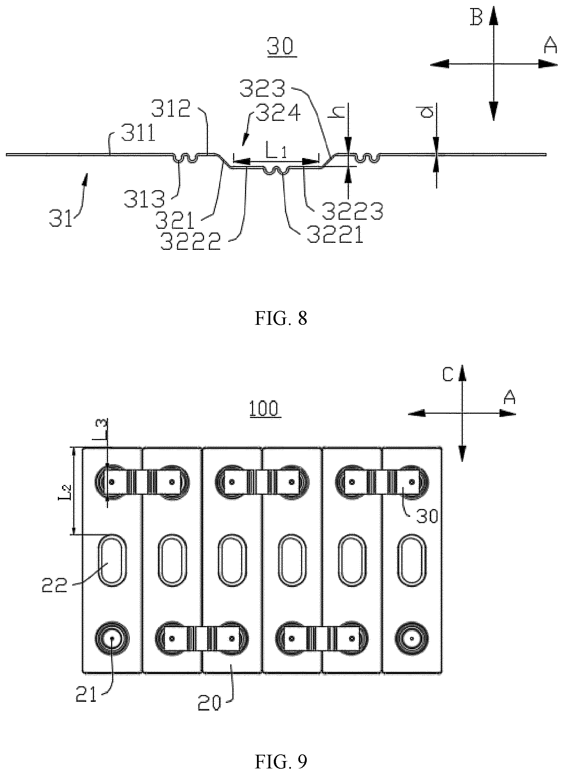

Referring to FIG. 7 and FIG. 8, FIG. 7 is a schematic structural diagram of a busbar component 30 according to some other embodiments of this application. FIG. 8 is a schematic front view of a busbar component 30 according to some other embodiments of this application. In some embodiments, the second buffer section 322 is partially bent to form a first buffer zone 3221.

The first buffer zone 3221 is a part serving a buffering function on the second buffer section 322. The first buffer zone 3221 may be a wavy structure.

It is hereby noted that the term "bent" here just means that, in terms of shape, the first buffer zone 3221 may be imagined as being formed by partially bending the second buffer section 322, but the first buffer zone 3221 is not necessarily formed by a "bending" process. For example, when the busbar component 30 is formed by casting, the above structure can be formed without performing the "bending" process.

The first buffer zone 3221 formed by partially bending the second buffer section 322 further improves the buffering effect of the buffer portion 32, and endows the buffer portion 32 with a larger buffering capacity. Therefore, the busbar component 30 can elongate to a longer length along the first direction when the battery cell 20 expands.

Referring to FIG. 7 and FIG. 8, in some embodiments, the second buffer section 322 includes a first connecting section 3222 and a second connecting section 3223. Along the first direction, the first buffer zone 3221 is located between the first connecting section 3222 and the second connecting section 3223. The first connecting section 3222 is connected to the first buffer section 321, and the second connecting section 3223 is connected to the third buffer section 323.

Along the first direction, the first connecting section 3222 and the second connecting section 3223 are located on two sides of the first buffer zone 3221, respectively. The first connecting section 3222 is a part that, in the second buffer section 322, connects the first buffer section 321 and the second buffer zone 313. The second connecting section 3223 is a part that, in the second buffer section 322, connects the third buffer section 323 and the second buffer zone 313.

The first buffer zone 3221 is connected to the first buffer section 321 by the first connecting section 3222, and the first buffer zone 3221 is connected to the third buffer section 323 by the second connecting section 3223. In this way, the first buffer zone 3221 is located on the second buffer section 322 at a position near the middle of the second buffer section, thereby facilitating deformation when the battery cell 20 expands.

Referring to FIG. 7 and FIG. 8, in some embodiments, along the second direction, the first buffer zone 3221 protrudes from the first connecting section 3222 and the second connecting section 3223 toward the battery cells 20.

"Along the second direction, the first buffer zone 3221 protrudes from the first connecting section 3222 and the second connecting section 3223 toward the battery cells 20" means that the first buffer zone 3221 protrudes toward the battery cells 20 by starting from the first connecting section 3222 and the second connecting section 3223.

It is hereby noted that the first buffer zone 3221 may obliquely protrude from the first connecting section 3222 and the second connecting section 3223 toward the battery cell 20, which also falls within the protection scope of this application.

The first buffer zone 3221 is made to protrude from the first connecting section 3222 and the second connecting section 3223 toward the battery cell 20 along the second direction, thereby making the space of the groove 324 larger, and in turn, facilitating wiring.

In some other embodiments, along the second direction, the first buffer zone 3221 protrudes from the first connecting section 3222 and the second connecting section 3223 away from the battery cells 20. In this case, although the space of the groove 324 becomes smaller, the first buffer zone 3221 does not occupy the space between the first connecting section 3222 and the wall portion 23 along the second direction, thereby increasing the space utilization rate of the battery 100. It is hereby noted that, along the second direction, the first buffer zone 3221 preferably does not extend beyond a surface of the connecting portion 31 along a direction directed away from the battery cell 20, where the surface is oriented away from the battery cell 20, so as to reduce the occupation of the internal space of the battery 100.

In some embodiments, along the first direction, a minimum distance between the first buffer section 321 and the second buffer section 322 is L₁, satisfying: 10 mm ≤ L₁ ≤ 50 mm.

L₁ represents the minimum distance between the first buffer section 321 and the second buffer section 322 along the first direction. Referring to FIG. 8, the distance between the lowermost end of the first buffer section 321 and the lowermost end of the second buffer section 322 is the minimum distance between the first buffer section 321 and the second buffer section 322 along the first direction.

Along the first direction, the value of the minimum distance between the first buffer section 321 and the second buffer section 322 may be: L₁ = 10 mm, 15 mm, 20 mm, 25 mm, 30 mm, 35 mm, 40 mm, 45 mm, 50 mm, or the like.

The distance between the first buffer section 321 and the second buffer section 322 along the first direction is limited to a range of 10 mm to 50 mm, thereby not only ensuring a sufficient area of the connecting portions 31 to facilitate connection between the connecting portion 31 and the battery cell 20, but also endowing the buffer portion 32 with a sufficient buffering capacity. When the battery cell 20 expands, the busbar component 30 can elongate for a sufficient distance along the first direction, and the space of the groove 324 is made relatively large to facilitate wiring. If L₁ is less than 10 mm, then the buffering capacity of the buffer portion 32 is relatively small, the buffering effect is weak, and the space of the groove 324 is relatively small and inconvenient for wiring. If L₁ is greater than 50 mm, the buffer portion 32 occupies a relatively large part of the busbar component 30, so that the area of the connecting portions 31 is relatively small and inconvenient for connection to the battery cell 20.

Referring to FIG. 8, in some embodiments, the first buffer section 321, the second buffer section 322, and the third buffer section 323 jointly define the groove 324. Along the second direction, the depth of the groove 324 is h, satisfying: 0 < h ≤ 10 mm.

The first buffer section 321, the second buffer section 322, and the third buffer section 323 jointly define the groove 324. The groove 324 is located on a side, oriented away from the battery cell 20, of the buffer portion 32 along the second direction.

h represents the depth of the groove 324 along the second direction. Referring to FIG. 5 and FIG. 6, along the second direction, a distance between a surface of the second buffer section 322 and a surface of the connecting portion 31 is h, both of the surfaces being oriented away from the battery cell 20. Referring to FIG. 7 and FIG. 8, along the second direction, the distance between a surface of the first connecting section 3222 or the second connecting section 3223 and a surface of the connecting portion 31 is h, both of the surfaces being oriented away from the battery cell 20.

Along the second direction, the value of the depth of the groove 324 may be h = 1 mm, 2 mm, 3 mm, 4 mm, 5 mm, 6 mm, 7 mm, 8 mm, 9 mm, 10 mm, or the like.

The depth of the groove 324 is limited to a range of 0 to 10 mm (excluding 0), thereby not only facilitating connection of the connecting portions 31 to the battery cell 20, but also endowing the buffer portion 32 with a sufficient buffering capacity, and also making the space of the groove 324 relatively large to facilitate wiring. If h is greater than 10 mm, then the distance between the connecting portion 31 and the second buffer section 322 is relatively large along the second direction, and the space between the connecting portion 31 and the wall portion 23 on which the electrode terminal 21 is disposed may be not enough for accommodating the buffer portion 32.

Still referring to FIG. 4, in some embodiments, the battery cells 20 are connected to the connecting portions 31 by a welding layer 40. The second buffer section 322 abuts against the battery cells 20.

In some embodiments, along the second direction, a surface of the electrode terminal 21 is flush with a surface of the wall portion 23, both surfaces being oriented away from the electrode assembly. In this case, a clearance exists between the connecting portion 31 and the wall portion 23 on which the electrode terminal 21 is disposed, and the width of the clearance is equivalent to the thickness of the welding layer 40. The buffer portion 32 is accommodated in the clearance.

In other embodiments, along the second direction, the electrode terminal 21 protrudes beyond the wall portion 23 in a direction from the electrode assembly to the wall portion 23. In this case, a clearance exists between the connecting portion 31 and the wall portion 23 on which the electrode terminal 21 is disposed, and the width of the clearance is equivalent to a sum of the thickness of the welding layer 40 and the amount of height by which the electrode terminal 21 protrudes beyond the wall portion 23. The buffer portion 32 is accommodated in the clearance.

The battery cell 20 is connected to the connecting portion 31 by the welding layer 40, so that a clearance exists between the connecting portion 31 and the wall portion 23 on which the electrode terminal 21 is disposed, and a minimum width of the clearance is the thickness of the welding layer 40. The buffer portion 32 is accommodated in the clearance to improve the utilization rate of the internal space of the battery 100 and increase the energy density of the battery 100. The second buffer section 322 abuts against the battery cell 20, so that the buffer portion 32 fully utilizes the space in the clearance, thereby considerably increasing the energy density of the battery 100.

Referring to FIG. 7 and FIG. 8, in some embodiments, at least one of the connecting portions 31 is partially bent to form a second buffer zone 313.

The second buffer zone 313 is a part serving a buffering function on the connecting portion 31. The second buffer zone 313 may be a wavy structure.

It is hereby noted that the term "bent" here just means that, in terms of shape, the second buffer zone 313 may be imagined as being formed by partially bending the connecting portion 31, but the second buffer zone 313 is not necessarily formed by a "bending" process. For example, when the busbar component 30 is formed by casting, the above structure can be formed without performing the "bending" process.

The connecting portion 31 is partially bent to form the second buffer zone 313, and therefore, when a battery cell 20 expands, both the buffer portion 32 and the second buffer zone 313 can deform, and the busbar component 30 can elongate to a longer length along the first direction, thereby reducing the risk of detachment of the connecting portion 31 from the battery cell 20.

Referring to FIG. 7 and FIG. 8, in some embodiments, at least one connecting portion 31 includes a third connecting section 311 and a fourth connecting section 312. Along the first direction, the second buffer zone 313 is located between the third connecting section 311 and the fourth connecting section 312. The third connecting section 311 is connected to the battery cell 20, and the fourth connecting section 312 is connected to the buffer portion 32.

Along the first direction, the third connecting section 311 and the fourth connecting section 312 are located on two sides of the second buffer zone 313, respectively. The third connecting section 311 is a part that, in the connecting portion 31, connects the battery cell 20 and the second buffer zone 313. The fourth connecting section 312 is a part that, in the connecting portion 31, connects the buffer portion 32 and the second buffer zone 313.

The second buffer zone 313 is connected to the battery cell 20 by the third connecting section 311, and the second buffer zone 313 is connected to the buffer portion 32 by the fourth connecting section 312. In this way, the second buffer zone 313 is located on the connecting portion 31 at a position near the middle of the connecting portion, thereby facilitating deformation when the battery cell 20 expands.

Referring to FIG. 7 and FIG. 8, in some embodiments, along the second direction, the second buffer zone 313 protrudes from the third connecting section 311 and the fourth connecting section 312 toward the battery cells 20.

"Along the second direction, the second buffer zone 313 protrudes from the third connecting section 311 and the fourth connecting section 312 toward the battery cells 20" means that the second buffer zone 313 protrudes toward the battery cells 20 by starting from the third connecting section 311 and the fourth connecting section 312.

It is hereby noted that the second buffer zone 313 may obliquely protrude from the third connecting section 311 and the fourth connecting section 312 toward the battery cell 20, which also falls within the protection scope of this application.

In contrast to a scenario in which the second buffer zone 313 protrudes from the third connecting section 311 and the fourth connecting section 312 away from the battery cells 20, the second buffer zone 313 protruding from the third connecting section 311 and the fourth connecting section 312 toward the battery cells 20 can utilize the internal space of the battery 100 more efficiently, reduce occupation of the internal space of the battery 100, and increase the energy density of the battery 100.

In some embodiments, at least two arched bulges are disposed in the second buffer zone 313.

The "at least two arched bulges" is understood to mean two arched bulges, three arched bulges, or more than three arched bulges. It is hereby noted that the arched bulges protrude from the third connecting section 311 and the fourth connecting section 312 toward the battery cells 20.

The at least two arched bulges disposed increase the buffering capacity of the second buffer zone 313.

Referring to FIG. 7 and FIG. 8, in some embodiments, the two connecting portions 31 each are partially bent to form two second buffer zones 313, respectively.

"The two connecting portions 31 each are partially bent to form two second buffer zones 313 respectively" means that one second buffer zone 313 is formed on one connecting portion 31 correspondingly.

The two connecting portions 31 each are bent to form two second buffer zones 313, and therefore, when a battery cell 20 expands, both the buffer portion 32 and the two second buffer zones 313 can deform, and the busbar component 30 can elongate to a longer length along the first direction, thereby reducing the risk of detachment of the connecting portions 31 from the battery cells 20.

Referring to FIG. 9, FIG. 9 is a schematic top view of a battery 100 (without showing a box 10) according to some embodiments of this application. In some embodiments, the battery cells 20 include a pressure relief mechanism 22. Along a third direction, the busbar component 30 is connected to at least one side of the pressure relief mechanism 22. A minimum distance between the pressure relief mechanism 22 and one end of the battery cells 20 is L₂. The width of the busbar component 30 is L₃, satisfying: 10 mm ≤ L₃ ≤ L₂. The first direction, the second direction, and the third direction are perpendicular to each other.

The third direction may be the width direction of the busbar component 30. Referring to FIG. 9, the third direction may be the direction C shown in the drawing.

A plurality of battery cells 20 are arranged in a direction perpendicular to the width direction of the busbar component 30.

L₂ represents the minimum distance between the pressure relief mechanism 22 and one end of the battery cell 20 along the third direction. Referring to FIG. 9, the distance between the upper end of the pressure relief mechanism 22 and the upper end of the wall portion 23 is L₂.

L₃ represents the width of the busbar component 30 along the third direction.

Obviously, the minimum distance between the pressure relief mechanism 22 and one end of the battery cell 20 along the third direction is greater than 10 mm, that is, L₂ ≥ 10 mm.

The width of the busbar component 30 along the third direction is expected to be greater than or equal to 10 mm and less than or equal to the minimum distance between the pressure relief mechanism 22 and one end of the battery cell 20 along the third direction.

By making the width L₃ of the busbar component 30 be greater than or equal to 10 mm, the width of the busbar component 30 is made relatively large. To the extent that the flow capacity is enough, the larger the width of the busbar component 30, the thinner the thickness of the busbar component 30 can be made, so as to reduce the stress on the electrode terminal 21 of the battery cell 20. In addition, because a plurality of battery cells 20 are arranged sequentially along the first direction, the busbar component 30 is connected to at least one side of the pressure relief mechanism 22 along the third direction. By making L₃ be less than or equal to L₂, the busbar component 30 is prevented from extending beyond the battery cell 20, thereby avoiding waste of the internal space of the battery 100, and reducing the risk of interference between different busbar components 30 or between a busbar component 30 and another component.

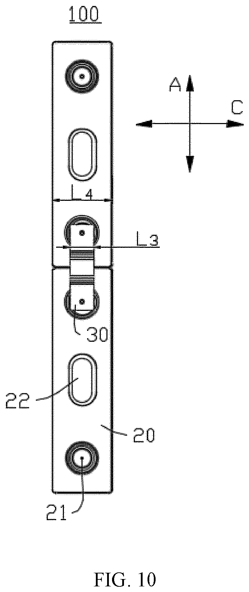

Referring to FIG. 10, FIG. 10 is a schematic top view of a battery 100 (without showing a box 10) according to some other embodiments of this application. In some embodiments, along the third direction, a width of the busbar component 30 is L₃, and a width of each of the battery cells 20 is L₄, satisfying: 10 mm ≤ L₃ ≤ L₄. The first direction, the second direction, and the third direction are perpendicular to each other.

L₃ represents the width of the busbar component 30 along the third direction.

L₄ represents the width of the battery cell 20 along the third direction.

The width of the busbar component 30 along the third direction is expected to be greater than or equal to 10 mm and less than or equal to the width of the battery cell 20 along the third direction.

By making the width L₃ of the busbar component 30 be greater than or equal to 10 mm, the width of the busbar component 30 is made relatively large. To the extent that the flow capacity is enough, the larger the width of the busbar component 30, the thinner the thickness of the busbar component 30 can be made, so as to reduce the stress on the electrode terminal 21 of the battery cell 20. By making L₃ be less than or equal to L₄, the busbar component 30 is prevented from extending beyond the battery cell 20, thereby avoiding waste of the internal space of the battery 100, and reducing the risk of interference between different busbar components 30 or between a busbar component 30 and another component.

In some embodiments, L₃ = L₄, that is, the width of the busbar component 30 along the third direction is equal to the width of the battery cell 20 along the third direction.

Along the third direction, the width of the busbar component 30 is equal to the width of the battery cell 20. In this case, the width of the busbar component 30 is the largest, and the thickness of the busbar component 30 can be made the thinnest to minimize the stress on the electrode terminal 21 of the battery cell 20.

Still referring to FIG. 6 and FIG. 8, in some embodiments, the thickness of the connecting portion 31 is d, satisfying: 0.5 mm ≤ d ≤ 3 mm.

The thickness of the connecting portion 31 means a distance between two oppositely disposed surfaces of the connecting portion 31 along a direction perpendicular to the contour of the connecting portion 31.

In these embodiments, the thickness of the first connecting section 3222, the thickness of the arched bulge in the second buffer zone 313, and the thickness of the second connecting section 3223 are all equal. Optionally, in these embodiments, the thickness of the busbar component 30 is equalized at all positions.

The value of the thickness of the connecting portion 31 may be d = 0.5 mm, 0.8 mm, 1 mm, 1.2 mm, 1.5 mm, 1.8 mm, 2 mm, 2.2 mm, 2.5 mm, 2.8 mm, 3 mm, or the like.

The thickness of the connecting portion 31 is set between 0.5 mm and 3 mm to avoid an excessive thickness of the connecting portion 31 while ensuring that the connecting portion 31 can be securely welded to the battery cell 20, thereby avoiding an excessive weight of the busbar component 30. If d is less than 0.5 mm, the thickness of the connecting portion 31 is insufficient, and can hardly ensure secure welding between the connecting portion 31 and the battery cell 20. If d is greater than 3 mm, the thickness of the busbar component 30 is relatively large, resulting in an increase in the weight of the battery 100.

In some embodiments, 0.5 mm ≤ d ≤ 1 mm.

The value of the thickness of the connecting portion 31 may be d = 0.5 mm, 0.6 mm, 0.7 mm, 0.8 mm, 0.9 mm, 1 mm, or the like.

By setting the thickness of the connecting portion 31 between 0.5 mm and 1 mm, the weight of the busbar component 30 is relatively light, and at the same time, the connecting portion 31 can be securely welded to the battery cell 20.

An embodiment of this application further provides an electrical device. The electrical device includes the battery 100. The battery 100 is configured to provide electrical energy for the electrical device.

According to some embodiments of this application, referring to FIG. 3 to FIG. 8,

An embodiment of this application provides a battery 100. The battery 100 includes a plurality of battery cells 20 and a busbar component 30. The busbar component 30 includes a buffer portion 32 and two connecting portions 31. The buffer portion 32 is connected between the two connecting portions 31 along a first direction. The two connecting portions 31 are connected to two of the battery cells 20 respectively to implement electrical connection between the two battery cells 20. Along a second direction, the buffer portion 32 protrudes from the connecting portions 31 toward the battery cells 20, where the second direction is perpendicular to the first direction. The busbar component 30 of the battery 100 includes a buffer portion 32. When a battery cell 20 expands, the buffer portion 32 can deform to elongate the busbar component 30 along the first direction, thereby preventing a relatively large shear force from being generated between the connecting portion 31 and the battery cell 20, and reducing the risk of detachment of the connecting portion 31 from the battery cell 20. In addition, in contrast to a scenario in which the buffer portion 32 protrudes from the connecting portion 31 away from the battery cells 20, the buffer portion 32 protruding from the connecting portion 31 toward the battery cells 20 can utilize the internal space of the battery 100 more efficiently, reduce occupation of the internal space of the battery 100, and increase the energy density of the battery 100. In addition, when the buffer portion 32 protrudes from the connecting portion 31 toward the battery cell 20 along the second direction, a corresponding groove 324 can be formed on a side, oriented away from the battery cell 20, of the buffer portion 32. The groove 324 is available for wiring, thereby further improving the utilization rate of the internal space of the battery 100 and further increasing the energy density of the battery 100.

The buffer portion 32 includes a first buffer section 321, a second buffer section 322, and a third buffer section 323 connected in sequence. The first buffer section 321 and the third buffer section 323 are connected to the two connecting portions 31 respectively. Along the second direction, the second buffer section 322 is closer to an electrode assembly of the battery cells 20 than the connecting portions 31. The second buffer section 322 is partially bent to form a first buffer zone 3221. The first buffer zone 3221 formed by partially bending the second buffer section 322 further improves the buffering effect of the buffer portion 32, and endows the buffer portion 32 with a larger buffering capacity. Therefore, the busbar component 30 can elongate to a longer length along the first direction when the battery cell 20 expands.

The battery cells 20 are connected to the connecting portions 31 by a welding layer 40. The second buffer section 322 abuts against the battery cells 20. The battery cell 20 is connected to the connecting portion 31 by the welding layer 40, so that a clearance exists between the connecting portion 31 and the wall portion 23 on which the electrode terminal 21 is disposed, and a minimum width of the clearance is the thickness of the welding layer 40. The buffer portion 32 is accommodated in the clearance to improve the utilization rate of the internal space of the battery 100 and increase the energy density of the battery 100. The second buffer section 322 abuts against the battery cell 20, so that the buffer portion 32 fully utilizes the space in the clearance, thereby considerably increasing the energy density of the battery 100.

At least one of the connecting portions 31 is partially bent to form a second buffer zone 313. The connecting portion 31 is partially bent to form the second buffer zone 313, and therefore, when a battery cell 20 expands, both the buffer portion 32 and the second buffer zone 313 can deform, and the busbar component 30 can elongate to a longer length along the first direction, thereby reducing the risk of detachment of the connecting portion 31 from the battery cell 20.

At least one of the connecting portions 31 includes a third connecting section 311 and a fourth connecting section 312. Along the first direction, the second buffer zone 313 is located between the third connecting section 311 and the fourth connecting section 312. The third connecting section 311 is connected to the battery cells 20. The fourth connecting section 312 is connected to the buffer portion 32. Along the second direction, the second buffer zone 313 protrudes from the third connecting section 311 and the fourth connecting section 312 toward the battery cells 20. In contrast to a scenario in which the second buffer zone 313 protrudes from the third connecting section 311 and the fourth connecting section 312 away from the battery cells 20, the second buffer zone 313 protruding from the third connecting section 311 and the fourth connecting section 312 toward the battery cells 20 can utilize the internal space of the battery 100 more efficiently, reduce occupation of the internal space of the battery 100, and increase the energy density of the battery 100.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A battery, comprising:
a plurality of battery cells; and
a busbar component, comprising a buffer portion and two connecting portions, wherein the buffer portion is connected between the two connecting portions along a first direction, and the two connecting portions are connected to two of the battery cells respectively to implement electrical connection between the two battery cells, wherein
along a second direction, the buffer portion protrudes from the connecting portions toward the battery cells, and the second direction is perpendicular to the first direction.

2. The battery according to claim 1, wherein the buffer portion comprises a first buffer section, a second buffer section, and a third buffer section connected in sequence; the first buffer section and the third buffer section are connected to the two connecting portions respectively; and, along the second direction, the second buffer section is closer to an electrode assembly of the battery cells than the connecting portions.

3. The battery according to claim 2, wherein the first buffer section is disposed at an obtuse angle to the second buffer section; and/or
the third buffer section is disposed at an obtuse angle to the second buffer section.

4. The battery according to claim 2 or 3, wherein the second buffer section is partially bent to form a first buffer zone.

5. The battery according to claim 4, wherein the second buffer section comprises a first connecting section and a second connecting section; along the first direction, the first buffer zone is located between the first connecting section and the second connecting section; the first connecting section is connected to the first buffer section; and the second connecting section is connected to the third buffer section.

6. The battery according to claim 5, wherein, along the second direction, the first buffer zone protrudes from the first connecting section and the second connecting section toward the battery cells.

7. The battery according to any one of claims 2 to 6, wherein, along the first direction, a minimum distance between the first buffer section and the second buffer section is L₁, satisfying: 10 mm ≤ L₁ ≤ 50 mm.

8. The battery according to any one of claims 2 to 7, wherein the first buffer section, the second buffer section, and the third buffer section jointly define a groove; and, along the second direction, a depth of the groove is h, satisfying: 0 < h ≤ 10 mm.

9. The battery according to any one of claims 2 to 8, wherein the battery cells are connected to the connecting portions by a welding layer, and the second buffer section abuts against the battery cells.

10. The battery according to any one of claims 1 to 9, wherein at least one of the connecting portions is partially bent to form a second buffer zone.

11. The battery according to claim 10, wherein at least one of the connecting portions comprises a third connecting section and a fourth connecting section; and, along the first direction, the second buffer zone is located between the third connecting section and the fourth connecting section; the third connecting section is connected to the battery cells; and the fourth connecting section is connected to the buffer portion.

12. The battery according to claim 11, wherein, along the second direction, the second buffer zone protrudes from the third connecting section and the fourth connecting section toward the battery cells.

13. The battery according to any one of claims 10 to 12, wherein at least two arched bulges are disposed in the second buffer zone.

14. The battery according to any one of claims 10 to 13, wherein the two connecting portions each are partially bent to form two second buffer zones respectively.

15. The battery according to any one of claims 1 to 14, wherein the battery cells comprise a pressure relief mechanism; along a third direction, the busbar component is connected to at least one side of the pressure relief mechanism; a minimum distance between the pressure relief mechanism and one end of the battery cells is L₂; and a width of the busbar component is L₃, satisfying: 10 mm ≤ L₃ ≤ L₂; and
the first direction, the second direction, and the third direction are perpendicular to each other.

16. The battery according to any one of claims 1 to 15, wherein, along the third direction, a width of the busbar component is L₃, and a width of each of the battery cells is L₄, satisfying: 10 mm ≤ L₃ ≤ L₄; and
the first direction, the second direction, and the third direction are perpendicular to each other.

17. The battery according to claim 16, wherein L₃ = L₄.

18. The battery according to any one of claims 1 to 17, wherein a thickness of each of the connecting portions is d, satisfying: 0.5 mm ≤ d ≤ 3 mm.

19. The battery according to claim 18, wherein 0.5 mm ≤ d ≤ 1 mm.

20. An electrical device, wherein the electrical device comprises the battery according to any one of claims 1 to 19, and the battery is configured to provide electrical energy for the electrical device.
